(19) Europäisches Patentamt
European Patent Office
Office européen des brevets

(11) **EP 4 394 644 A1**

(12) **EUROPEAN PATENT APPLICATION**

(43) Date of publication:
**03.07.2024 Bulletin 2024/27**

(21) Application number: **23220494.1**

(22) Date of filing: **28.12.2023**

(51) International Patent Classification (IPC):
**G06F 30/23** (2020.01)

(52) Cooperative Patent Classification (CPC):
**G06F 30/23;** G06F 2111/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.12.2022 US 202218147783**

(71) Applicant: **Dassault Systemes Americas Corp.**
**Waltham, MA 02451 (US)**

(72) Inventors:
• **Scherz, Lennart**
  **Hamburg (DE)**
• **Pedersen, Claus Bech Wittendorf**
  **Hamburg (DE)**

(74) Representative: **Bandpay & Greuter**
**11 rue Christophe Colomb**
**75008 Paris (FR)**

(54) **AVERAGE ACCELERATIONS FOR SENSITIVITY BASED OPTIMIZATION**

(57) Embodiments automatically determine optimized designs of real-world objects. Using a computer-based model representing a real-world object, an embodiment determines equilibriums of the real-world object across a plurality of time steps. Determining said equilibriums determines velocities of the real-world object across the plurality of time steps. Average acceleration of the real-world object is determined for each of a plurality of time windows (defined across the plurality of time steps) using the determined velocities. Sensitivity of each determined average acceleration is calculated. The determined average accelerations are used to define at least one of a constraint and an objective function. The computer-based model representing the real-world object is iteratively optimized, using the calculated sensitivity of each determined acceleration, with respect to at least one of the constraint and the objective function. The iterative optimization results in an updated computer-based model, representing the optimized design of the real-world object.

**EP 4 394 644 A1**

**Description**

BACKGROUND

A number of systems and programs are offered on the market for the design of parts using computer aided design (CAD), or computer aided engineering (CAE). These so-called CAD systems allow a user to construct and manipulate complex three-dimensional models of objects or assemblies of objects. CAD systems thus provide a representation of modeled objects using edges, lines or, in certain cases with faces or polygons. Lines, edges, faces or polygons may be represented in various manners, e.g., non-uniform rational basis splines (NURBS).

These CAD systems manage parts or assemblies of parts modeled by objects, which are mainly specifications of geometry. In particular, CAD files contain specifications, from which geometry is generated. From geometry, a representation is generated. Specifications, geometry, and representations may be stored in a single CAD file, or multiple CAD files. CAD systems include graphic tools for representing the modeled objects to the designers; these tools are dedicated to the display of complex objects. For example, an assembly may contain thousands of parts. A CAD system can be used to manage models of objects, which are stored in electronic files.

The advent of CAD and CAE systems allows for a wide range of representation possibilities for objects. One such representation is a finite element model (FEM). A FEM, or other such CAD, CAE, or computer-based model, may be programmed in such a way that the model has the properties of the underlying object or objects that the model represents. When a FEM, or other such computer-based model is programmed in such a way, it may be used to perform simulations of the object that the model represents. For example, a FEM may be used to represent the interior cavity of a vehicle, the acoustic fluid surrounding a structure, and any number of real-world objects and systems. When a given model represents an object and is programmed accordingly, it may be used to simulate the real-world object itself. For example, a FEM representing a stent may be used to simulate the use of the stent in a real-life medical setting.

Computer-based models may be used to improve the design of the objects that the models represent. Design improvements may be identified through use of computer-based optimization techniques that run a series of simulations in order to identify changes to the design of the model and thus, the underlying real-world object that the model represents.

SUMMARY

While computer-based optimization methods for designing real-world objects exist, these existing methods are computationally expensive and can benefit from improvements. Embodiments provide such improvements. Embodiments are directed to automated real-world object design, optimization, and simulation that provides computer-based design functionality which determines optimized object designs through use of average accelerations.

One such example embodiment provides a computer-implemented method of automatically determining an optimized design of a real-world object. Such a method begins by defining, in memory of a processor, a computer-based model representing the real-world object. The computer-based model is then used to determine the equilibriums (relating to Newton's equilibrium theory) of the real-world object for each of a plurality of time steps (or time periods). Determining the equilibriums determines velocities (along a respective axis, or along a common axis) of the real-world object across the plurality of time steps. Such an example embodiment continues by determining, using the determined velocities, average acceleration for each of a plurality of time windows defined across the plurality of time steps. Further, the sensitivities of each determined average acceleration are calculated using sensitivities of the determined velocities. Thereafter, the determined average accelerations are used to define at least one of: a constraint and an objective function. Finally, the calculated sensitivity of each determined average acceleration is used to iteratively optimize the computer-based model representing the real-world object with respect to the defined at least one of the constraints and the objective function. The iterative optimization results in an updated computer-based model representing the optimized design of the real-world object.

In embodiments, the computer-based model can be any computer-based model known in the art. For instance, according to an embodiment, the computer-based model is a finite element model, a boundary element method, a finite difference method, a finite volume method, or a discrete element method.

According to an embodiment, determining the average acceleration for a given time window of the plurality of time windows using the determined velocities includes identifying: (i) a velocity at a start point of the given window and (ii) a velocity at an end point of the given time window. Further, such an embodiment calculates the average acceleration for the given time window using (i) the identified velocity at the start point, (ii) the identified velocity at the end point and (iii) a length, in time, of the given time window. Yet another embodiment calculates the sensitivity of the average acceleration for the given time window, with respect to a given design variable, using the identified velocity at the start point and the identified velocity at the end point.

In a further embodiment, the calculated sensitivity of each determined average acceleration and at least one of: discrete accelerations, sensitivities of a structural measure, and sensitivities of a multi-physics measure, are used in iteratively optimizing the computer-based model. In yet another embodiment, a user defined requirement is received and the user defined requirement and each determined average acceleration are used to define at least one of the constraint and the objective function.

In embodiments, the real-world object represented by the computer-based model can be any object. For instance, in an embodiment, the real-world object is an automobile, a plane, an electronic device, a medical instrument, or armor or other similar protective designs/obj ects.

A further embodiment is directed to a system for automatically determining an optimized design of a real-world object. The system includes a processor and a memory with computer code instructions stored thereon. In such an embodiment, the processor and the memory, with the computer code instructions, are configured to cause the system to implement any embodiments, or combination of embodiments, described herein.

Another embodiment is directed to a non-transitory computer program product for automatically determining an optimized design of a real-world object. Such an embodiment is directed to a computer program product executed by a server in communication across a network with one or more clients, where the computer program product comprises program instructions which, when executed by a processor, causes the processor to implement any embodiments or combination of embodiments described herein.

BRIEF DESCRIPTION OF THE DRAWINGS

The foregoing will be apparent from the following more particular description of example embodiments, as illustrated in the accompanying drawings in which like reference characters refer to the same parts throughout the different views. The drawings are not necessarily to scale, emphasis instead being placed upon illustrating embodiments.

FIG. 1 represents an example system for which response and sensitivity of vertical acceleration can be computed according to an embodiment.

FIGs. 2A - 2B are plots showings the response and sensitivity, respectively, of the vertical acceleration for the system shown in FIG. 1.

FIG. 3 is a plot showing the response of a structure optimized using 20 design points.

FIG. 4 is a flow chart of a method for automatically determining an optimized design of a real-world object according to an embodiment.

FIG. 5 is a plot illustrating a method of calculating continuous average accelerations $\bar{a}$ according to an embodiment.

FIG. 6A is a plot showing a continuous average acceleration calculation according to an embodiment.

FIG. 6B is a plot illustrating velocities used in calculating the continuous average acceleration of FIG. 6A.

FIGs. 7A - 7D are plots showing methods of determining average continuous acceleration using two velocities for a time window that may be used in embodiments.

FIGs. 8A - 8B are plots illustrating a comparison between optimizing continuous average accelerations calculated using velocities at discrete time points, where the direct accelerations are evaluated for the optimization; and optimizing strictly the accelerations using additional discrete direct acceleration points for the optimization.

FIG. 9 is a flow diagram illustrating an iterative design process that calculates and utilizes continuous average accelerations according to an embodiment.

FIG. 10 is a simplified diagram of an environment including a real-world object that may be optimized using embodiments.

FIG. 11 is a plot showing acceleration curves versus displacement intrusion for the environment of FIG. 10.

FIG 12 is a plot showing discrete displacements, discrete accelerations and continuous average accelerations in time for an optimization of the environment of FIG. 10, where a largest value of the discrete accelerations $a(t_i)$ and the continuous average accelerations $\bar{a}(t_i)$ are minimized and the displacement intrusions are constrained.

FIGs. 13A - 13E illustrate a simplified pedestrian-car impact model applied for non-parametric shape optimization using embodiments.

FIGs. 14A - 14C are plots showing optimization iteration history for an embodiment that minimizes maximum accelerations.

FIGs. 15A - 15C are plots showing optimized accelerations, determined using embodiments, as a function of both time and displacement.

FIGs. 16A - 16C are plots illustrating nodal non-parametric shape optimization designs determined using embodiments.

FIGs. 17A - 17D illustrate steps of a bonnet shell model optimization implemented using embodiments.

FIG. 18 are plots depicting optimization iteration history and accelerations for a sizing thickness optimized design and for the bead nodal optimized design determined using embodiments.

FIGs. 19A - 19B show sizing elemental thickness and bead nodal optimized designs determined using embodiments.

FIG. 20 is a simplified block diagram of a computer system for automatically determining an optimized design of a real-world object according to an embodiment.

FIG. 21 is a simplified block diagram of a computer network environment in which an embodiment of the present invention may be implemented.

DETAILED DESCRIPTION

A description of example embodiments follows.

The term "sensitivities" is used herein, however, it is noted that sensitivities are mathematically equivalent to derivatives, and the term sensitivities is commonly used in multidisciplinary optimization.

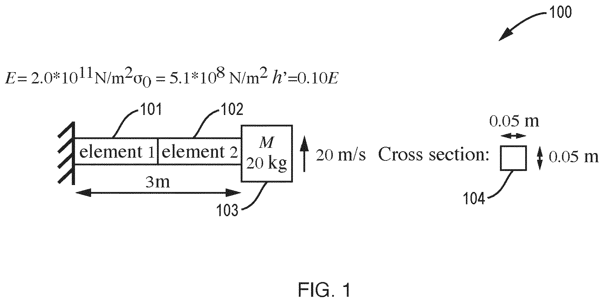

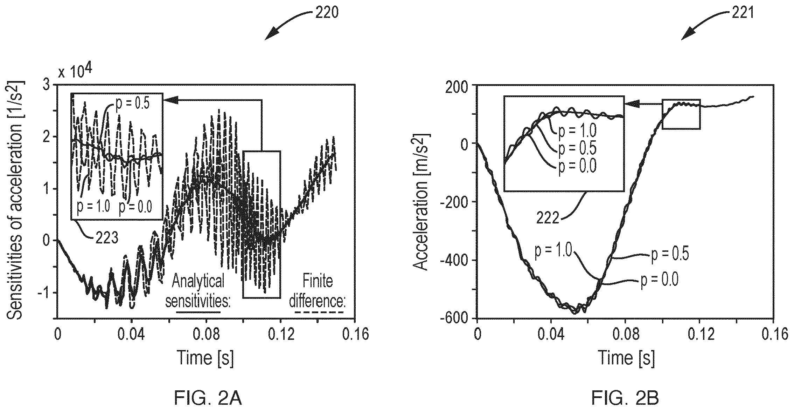

Embodiments provide improvements to automated product designing based upon optimization and simulation. Generally, sensitivity based optimization for accelerations in time using sensitivities is challenging because the accelerations are the displacements differentiated twice with respect to time, and the acceleration sensitivities are additionally differentiated one more time, with respect to the design variable. Thereby, both the accelerations and the corresponding acceleration sensitives are both physically and numerically noisy. *See* [1], [2], [3] (bracketed numbers in this document refer to the enumerated list of references hereinbelow). Said noise is commonly observed by higher order, highly-localized, oscillations in accelerations and their sensitivities. FIG. 1 and FIG. 2A - 2B illustrate this problematic noise. Specifically, FIG. 1 illustrates a simple fixed beam system 100 where the beam with cross section 104 is composed of elements 101-102 and mass 103, where mass 103 is moving at a velocity of 20 m/s. FIGs. 2A and 2B are plots 220 and 221 of acceleration sensitivities versus time and acceleration versus time, respectively, determined in a sensitivity based optimization of the system 100. The zoomed in views 222 and 223 show large and highly localized oscillations for the accelerations (view 222) and corresponding sensitivities (view 223) in the context of optimization of the beam system 100.

Therefore, applying these accelerations and sensitivities directly in sensitivitybased optimization has many drawbacks. For instance, additional optimization iterations are required and/or local suboptimal minimal optimized designs are obtained.

Amongst other applications, many designers request the present acceleration optimization and the corresponding non-parametric optimization functionality for crashworthiness designing. Competitors and academic publications suggest different approaches of handling accelerations for obtaining crashworthiness-optimized designs using sensitivities, but none with the present generality and potential industrial impact for acceleration designing.

The references [1], [2], and [3] suggest two approaches for reducing the influence of the oscillations and noise in accelerations and sensitivities for sensitivity based optimization. For example, smooth accelerations and acceleration sensitivities for the optimization have been achieved through application of numerical damping that adds high damping to the primal dynamic solution so the transient higher order, highly-localized oscillations, are suppressed. This has the drawback that the physical accuracy of the primal dynamic solution can be jeopardized and thereby, the optimized design can be faulty. Additionally, it can be hard to choose the feasible numerical damping for a specific example, and many trial-and-error studies have to be conducted to determine the feasible damping.

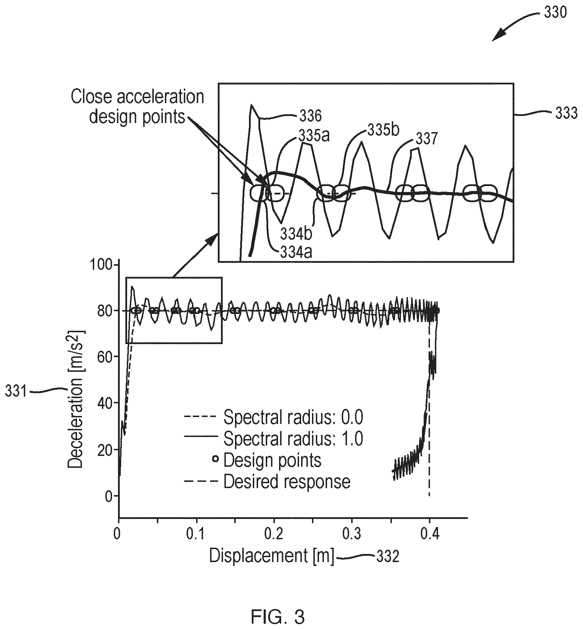

Further, indirect slope control has been applied to indirectly control the slope of the acceleration curve. This is done by adding acceleration design points close to existing design points for design points where the accelerations are measured for use in the optimization formulation. However, this formulation for accelerations in the optimization does not represent or capture the acceleration characteristic between acceleration design points. The plot 330 in FIG. 3 illustrates this problem. The plot 330 illustrates acceleration 331, i.e., deceleration, versus displacement 332. The zoomed-in view 333 of the plot 330 shows added design points 334a-b and existing design points 335a-b. In the zoomed-in view 333, it can be seen that the design points 334a-b and 335a-b do not capture, for instance, the acceleration given by the curve 336, where the curve 336 has no damping in the numerical modeling. Further, the curve 337 has impracticable maximum numerical damping and, nonetheless, the local accelerations between design points 334a and 335a are not captured.

References [4], [5], and [6] suggest a fundamentally different approach using so-called equivalent static loads (ESLs), which map the dynamic responses of the transient modeling into an approximated linear static model for which the sensitivities are calculated. References [4] and [5] also apply accelerations in the sensitivity based optimization, but the accelerations and their sensitivities are defined using the displacements from the approximated linear static modeling. The inventive approach described herein directly applies the transient responses and their sensitivities of the dynamic analysis for the optimization and no linear static approximations are applied. Reference [7] contains concern with whether the ESLs optimization approach works generally for sensitivity based transient optimization.

Reference [8] suggests a fundamentally different approach compared to references [9] and [10] for acceleration optimization. The approach in reference [8] reduces the design modeling of the design space (reduced number of design variables) which it defines as "[h]aving only few spatial variables." Having only a few spatial variables allows reference [8] to compute acceleration numerically, using finite differences. Additionally, the introduction of the spatial variables considerably reduces the noise by averaging over a very large number of design variables. However, this approach does not guarantee a reduction to noise levels and high-localized oscillations in time for acceleration and their sensitivities. Moreover, this approach is not valid for the innovative methods described herein, as the high number of design variables are calculated analytically or semi-analytically, and thereby, the high level of design freedom yields better performance of the optimized system.

Non-parametric optimization methods exist which are not based upon acceleration sensitivities, but still include accelerations in the optimization formulation. *See* [11]. However, these methods are not related to the group of acceleration optimization approaches based upon acceleration sensitivities as described herein.

The previously mentioned optimization approaches preliminarily apply transient continuum finite element modeling for transient simulation. However, multibody simulation (MBS) is a method of numerical simulation in which multibody systems are composed of various rigid or elastic bodies. References [12], and [13] describe acceleration optimization for MBS systems using acceleration sensitivities. In references [12] and [13] the accelerations are applied directly in the optimization without any additional considerations, as the accelerations of the MBS systems described in [12] and [13] look rather smooth and have a low-level of noise and highly-localized oscillations. Thus, the acceleration characteristics of these MBS are different from the, herein described, inventive method's considered acceleration responses which have a high-level of noise and oscillations. However, if the MBS systems should have a high level of noise and oscillations in the acceleration (e.g., for contacts and bearings) then the embodiments described herein can also be applied for acceleration optimization of MBS systems.

Typically, many situations for crashworthiness events, impact events, drop events, etc., from the Transportation and Mobility sector (e.g., cars), the Aerospace and Defense sector (e.g., airplanes), the Life Science sector (e.g., medical devices), and the High-tech sector (e.g., cell phones and laptops) are applied by engineers to address the following design criteria in time.

Engineers apply situations for crashworthiness events, impact events, drop events, etc., in order to minimize maximum intrusions (maximum elastic or plastic displacements penetrating into the structure and thereby, hit critical components or humans). The engineers apply situations for crashworthiness events, impact events, drop events, etc., in order to minimize material failure at local material point levels. For example, if local material is torn apart, and substances are leaking from a tank, or isolating material is torn apart or penetrated, and a short circuit is present. The engineers apply situations for crashworthiness events, impact events, drop events, etc., in order to minimize maximum accelerations. Frequently, maximum accelerations are a performance measure covering the overall biomechanical impact of a human body. In addition, other criteria determined by the accelerations are applied for measuring the biomechanical impact, e.g., the head injury criterion (often called HIC). Sometimes, one has to use a detailed and realistic model of the human body, and one has to know the specific mass and stiffness of the human parts and joints, for using these biomechanical criteria. Thus, frequently in the initial design phase, the maximum accelerations are considered as design measures. Typically, if the maximum accelerations in time are overall minimized, then many of these criteria are also indirectly minimized.

Amongst other applications, the inventive approaches described herein address minimizing maximum accelerations in time. Embodiments can be applied in conjunction with the design criteria of minimizing maximum intrusions into the structure, meaning that both criteria are considered in optimizations. Moreover, embodiments can be indirectly applied to address design criteria requirements for minimizing material failure at local material point levels. Additionally, maximum accelerations are easier for the engineer to compute compared to calculating and defining the material failure at local material point levels.

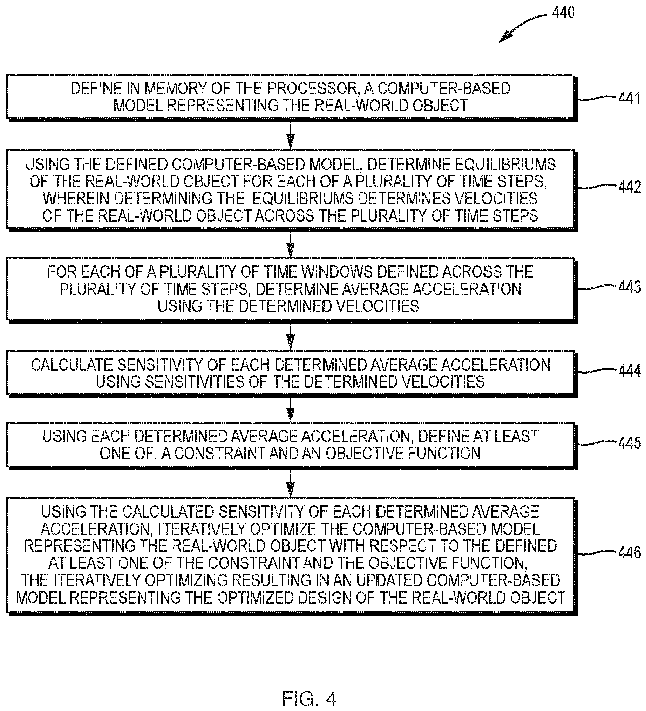

FIG. 4 is a flowchart of a method 440 for automatically determining an optimized design of a real-world object. The method 440 is computer-implemented and, as such, is carried by one or more processors.

The method 440 begins by defining 441 in memory of the processor, a computer-based model representing the real-world object. The method 440 next uses the defined computer-based model to determine 442 equilibriums (relating to Newton's equilibrium theory) for the real-world object for each of a plurality of time steps (or time periods). Determining 442 the equilibriums determines velocities (along a respective axis, or along a common axis) of the real-world object across the plurality of time steps. Next, at step 443 average acceleration for each for each of a plurality of time windows are determined. In such an embodiment of the method 440, the time windows are defined across the plurality of time steps. To illustrate, consider an embodiment where equilibriums are determined at step 442 in 1 second time steps for an optimization of a 30 second time period. In such an embodiment, six, five second time windows may be defined and, at step 443, an average acceleration is determined for each of the five second time windows using the beginning velocity and ending velocity of each 5 second time window. For instance, average acceleration for the time window from 25 seconds to 30 seconds, is calculated at step 443 using the velocity at 25 seconds and the velocity at 30 seconds. To continue, sensitivity of each determined average acceleration (determined at step 443) is calculated 444 using sensitivities of the determined velocities (determined at step 442). In turn, at step 445, the determined average accelerations from step 443, are used to define at least one of: a constraint and an objective function. The calculated sensitivity of each determined average acceleration from 444, is used to iteratively optimize 446 the computer-based model representing the real-world object with respect to the defined at least one of the constraint and the objective function (from step 445). The iteratively optimizing 446 results in an updated computer-based model representing the optimized dressing of the real-world object.

In embodiments of the method 440, the computer-based model defined at step 441 can be any computer-based model known in the art. For instance, according to an embodiment, the computer-based model is a finite element model, a boundary element method, a finite difference method, a finite volume method, or a discrete element method. In embodiments, the real-world object represented by the computer-based model can be any object. For instance, in an embodiment, the real-world object is an automobile, a plane, an electronic device, a medical instrument, or armor or other similar protective designs/objects.

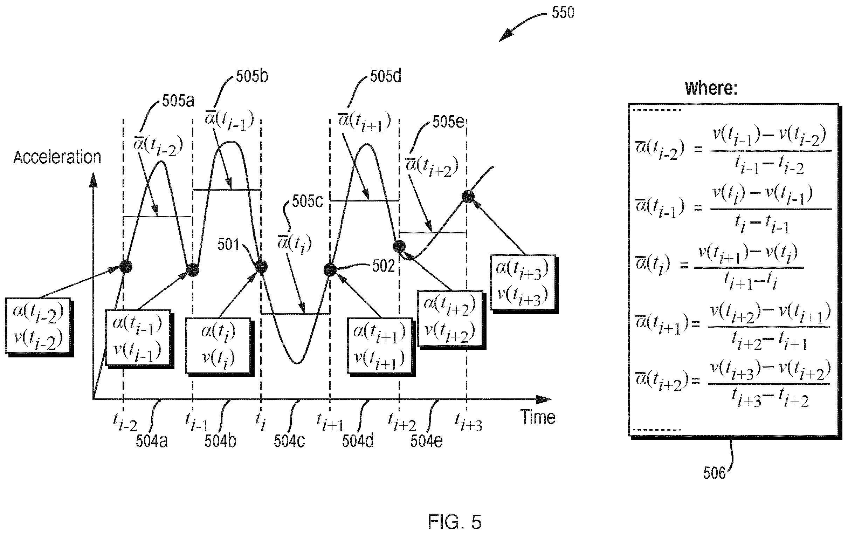

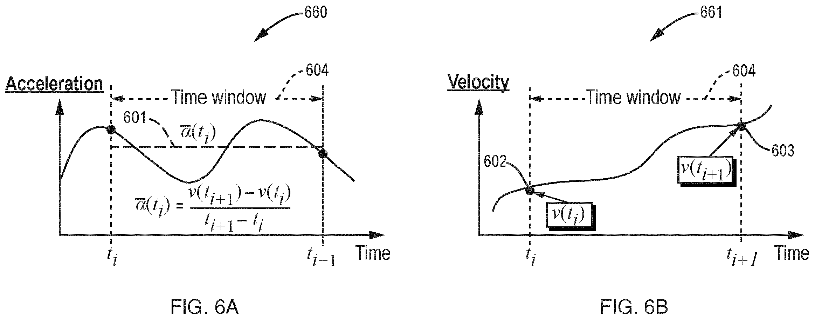

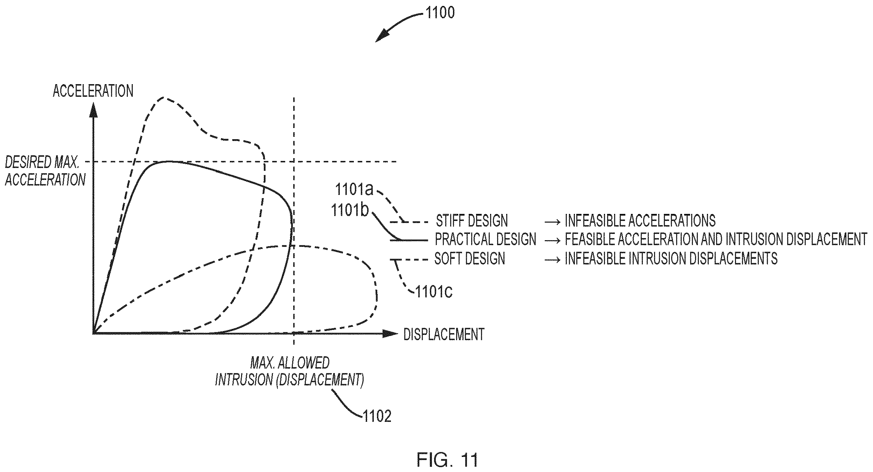

According to an embodiment of the method 440, determining the average acceleration 443 for a given time window of the plurality of time windows using the determined velocities includes identifying: (i) a velocity at a start point of the given window and (ii) a velocity at an end point of the given time window. *See,* FIG. 6B 602 and 603. Further, such an embodiment calculates the average acceleration 443 for the given time window using (i) the identified velocity at the start point, (ii) the identified velocity at the end point and (iii) a length, in time, of the given time window. *See,* FIG. 5. Yet another embodiment of the method 440 calculates the sensitivity of the average acceleration for the given time window, with respect to a given design variable, using the identified velocity at the start point and the identified velocity at the end point. *See,* FIGs. 11 - 12. An embodiment of the method 440 uses the functionality described hereinbelow in relation to FIG. 5 at step 443 to determine the average accelerations.

In another embodiment, a user defined requirement is received and the user defined requirement and each determined average acceleration are used to define 445 at least one of the constraint and the objective function. According to yet another embodiment of the method 440, the calculated sensitivity of each determined average acceleration and at least one of: discrete accelerations, sensitivities of a structural measure, and sensitivities of a multi-physics measure, are used in iteratively optimizing 446 the computer-based model.

The embodiments disclosed herein introduce additional average accelerations, i.e., "continuous average accelerations," for sensitivity based optimization where the accelerations at discrete time points are also applied for design optimization in objective functions or/and constraints.

FIG. 5 is a plot 550 that shows, in an example embodiment, how continuous average accelerations $\bar{a}$ are calculated for time windows using velocities at discrete time points, where the accelerations are also evaluated for the optimization. Plot 550 shows the time windows 504a-e where the average accelerations 505a-e are given by the equations 506. To illustrate an example, consider the time window 505c. The length of the time window 505c is ($t_{i+1}$ - $t_i$) and the velocity 501 at the start of the time window 505c is $v(t_i)$ and the velocity 502 at the end of the time window 505c is $v(t_{i+1})$. For the time window 505c, the average acceleration is given by the equation:

$$\bar{a}(t_i) = \frac{v(t_{i+1}) - v(t_i)}{t_{i+1} - t_i}$$

The methodology illustrated in the plot 550 can be implemented at step 443 of the method 440 described hereinbelow. The plot 550 shows that the time discretization for the acceleration can be coarse, and the overall acceleration characteristic is still captured.

The continuous average acceleration $\bar{a}$ measures, and possible other measure(s) can be applied in embodiments (e.g., at step 445 of the method 440 described hereinabove in relation to FIG. 4) to define an optimization problem consisting of constraints c which have to be fulfilled c* and an objective function *f* which is optimized (minimized or maximized). An example objective function and constraints are given by the following:

**Objective function:**

$$f\left(.....\bar{a}\left(t_{i-2}\right),\bar{a}\left(t_{i-1}\right),\bar{a}\left(t_{i}\right),\bar{a}\left(t_{i+1}\right),\bar{a}\left(t_{i+2}\right).....\right)$$

or/and

Constraints:

$$c_{1}\left(.....\bar{a}\left(t_{i-2}\right),\bar{a}\left(t_{i-1}\right),\bar{a}\left(t_{i}\right),\bar{a}\left(t_{i+1}\right),\bar{a}\left(t_{i+2}\right).....\right) \leq c_{1}^{*}$$

$$c_2\left(.....\overline{a}\left(t_{i-2}\right),\overline{a}\left(t_{i-1}\right),\overline{a}\left(t_i\right),\overline{a}\left(t_{i+1}\right),\overline{a}\left(t_{i+2}\right).....\right) \leq c_2^*$$

$$c_3\left(.....\overline{a}\left(t_{i-2}\right),\overline{a}\left(t_{i-1}\right),\overline{a}\left(t_i\right),\overline{a}\left(t_{i+1}\right),\overline{a}\left(t_{i+2}\right).....\right) \leq c_3^*$$

....................

Additionally, the continuous average acceleration optimization can be combined (e.g., at step 446 of the method 440) with other measures for which sensitivities are present. For example, said other measures may include direct measures of the real-world object represented by the computer-based model (e.g., mass, center of gravity, etc.) or measures determined by results of a structural and/or a multiphysics solution for an equilibrium of the model (e.g., the discrete accelerations, stresses, displacements, forces, modal eigenfrequencies, temperatures, etc.).

FIGs. 6A and 6B are plots 660 and 661, respectively, illustrating an advantage of the continuous average acceleration $\overline{a}$ 601 for an optimization, according to an embodiment. Specifically, the plots 660 and 661 illustrate the continuous average acceleration 601 being calculated strictly using the velocity at the start point 602 and the velocity at the endpoint 603 for the time window 604.

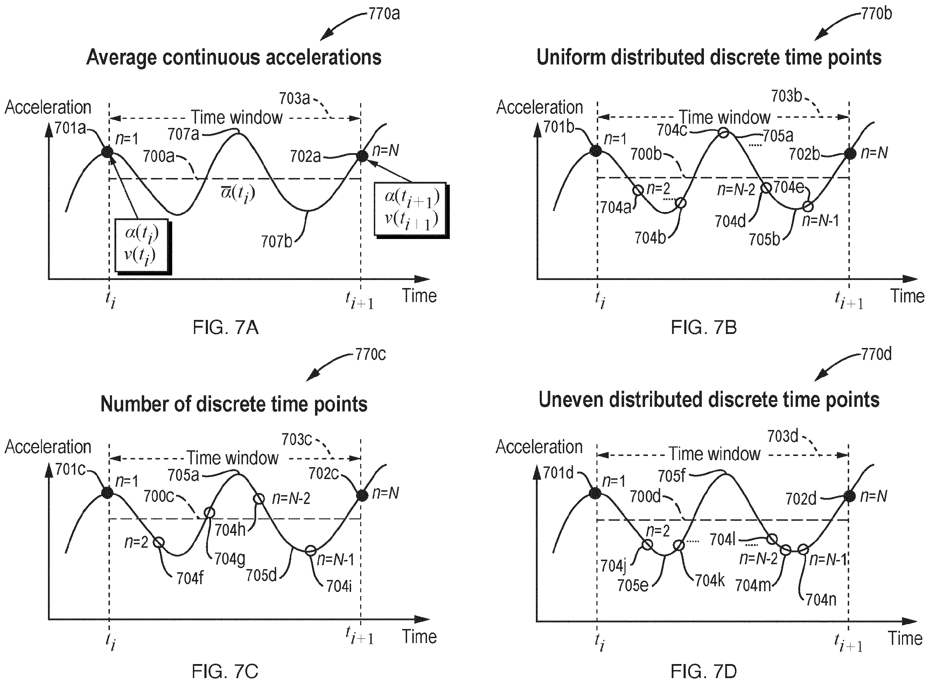

FIGs. 7A - 7D are plots 770a-d that illustrate the average continuous accelerations 700a-d using two velocities 701a-d and 702a-d for the time windows 703a-d. The plots 770a-d show that the continuous average accelerations 700a-d calculated using velocities 701a-d and 702a-d do not depend upon additional discrete acceleration time points, e.g., 704a-n. Consequently, the average continuous accelerations 700a-d for the time windows 703a-d are consistent. Additionally, FIGs. 7B - 7D show that choosing additional acceleration points 704a-n in the time windows 703b-d does not ensure that acceleration peaks, e.g., 705a-f, in the time windows 703b-d are captured in a consistent manner, and a better accuracy is not obtained. Thereby, the average continuous acceleration 700a-d for a given time window 703a-d typically reduces the influence of the highly localized oscillations, and noise of the accelerations, and their sensitivities for the optimization. As such, a better convergence for optimization iteration histories is frequently seen and obtained designs have improved structural properties with respect to accelerations.

More specifically, the average continuous acceleration 700a in FIG. 7A does not depend on values, e.g., 707a-b inside the time window 703a. FIGs. 7B - 7D show that if, for instance, one were to consider additional discrete acceleration points, e.g., 704a-n, inside the time windows 703b-d, these additional points 704a-n would not capture the high or low peak accelerations, e.g., 705a-f. Thereby, determining the average continuous acceleration 700a-d using the start and end-point velocities 701a-d and 702a-d, has better accuracy and optimization robustness compared to using discrete acceleration time points 704a-n inside the time windows 703b-d.

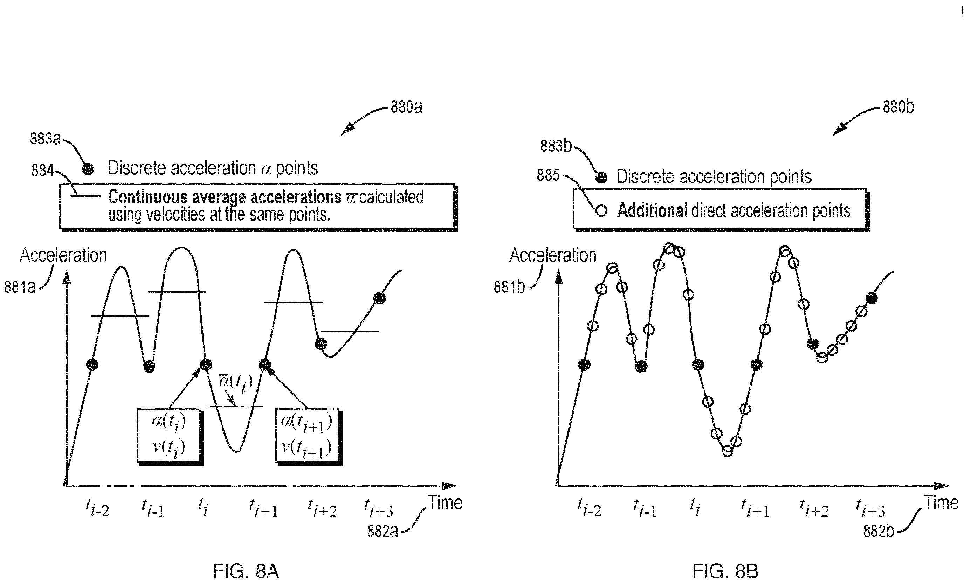

FIG. 8A is a plot 880a showing acceleration 881a versus time 882a where discrete acceleration points are shown by dots 883a and continuous average accelerations are shown by bars 884. FIG. 8B is a plot 880b showing acceleration 881b versus time 882b where discrete acceleration points are shown by dots 883b and additional acceleration points are shown by open circles 885. The plot 880b illustrates a conventional approach for capturing acceleration 881b over time 882b through applying additional discrete accelerations 885. In the plot 880b, the additional accelerations 885 can be used in a conventional sensitivity based optimization in an attempt to capture full characteristics of the acceleration 881b as a function of time 882b the design optimization. In comparison, the plot 880a of FIG. 8A, shows the enhanced optimization formulation including continuous average accelerations 884 for describing the full characteristics of the acceleration 881a in time 882a for a design optimization. By employing average accelerations 884 in an optimization formulation such an embodiment has less dependency upon the time discretization. This is because the number of time points, and the location of these time points inside the time window, has less influence upon the optimization iteration history and the final optimized design.

Another typical approach is applying a numerical averaging or filtering (also called digital signal processing, *See,* [14]) of the additional discrete accelerations, e.g., 885, over time to remove high frequency content, often considered "noise." However, the numerical averaging or filtering of discrete accelerations is suboptimal compared to the embodiments described herein. Firstly, numerical acceleration averaging or filtering of the discrete accelerations can be highly dependent upon the time discretization inside the time window, such as the number of time points and the locations of these time points inside the time window. These values then have an influence upon the optimization iteration history and the final optimized design. This is especially true if the accelerations have high-localized oscillations and noise. If the accelerations have high-localized oscillations and noise then, the numerical acceleration averaging or filtering of the discrete accelerations for a given time window can easily include local misleading acceleration values. Secondly, the numerical performance of the embodiments described herein can be significantly better, as embodiments use velocity values at the start point and at the endpoint of each time window 703. In comparison, numerical averaging or filtering of the discrete accelerations might require many discrete time points inside a time window to capture acceleration characteristics.

Instead of using many discrete acceleration points, or instead of numerical and/or approximated calculation of the acceleration integral of the average acceleration for a discrete time window, embodiments use velocities at the beginning $t_i$, e.g., 501, and at the end $t_{i+1}$, e.g., 502, of time windows, e.g., 504c, to define a continuous average acceleration $\bar{a}$ design response, e.g. 505c, for an optimization. This is feasible as the analytical integrating of the acceleration for the time interval from $t_i$ to $t_{i+1}$ has the following relation to the discrete velocities at $t_i$ and $t_{i+1}$:

$$\int_{t_i}^{t_{i+1}} a(t)\,dt \;=\; v(t_{i+1}) - v(t_i)$$

Then, the continuous average acceleration $\bar{a}$ as a design response is calculated as:

$$\bar{a}(t_i) \;=\; \frac{\displaystyle\int_{t_i}^{t_{i+1}} a(t)\,dt}{t_{i+1} - t_i} \;=\; \frac{v(t_{i+1}) - v(t_i)}{t_{i+1} - t_i} \;=\; \frac{v(t_{i+1}) - v(t_i)}{\Delta t_i}$$

Thereby, the continuous average acceleration $\bar{a}$ design response captures the acceleration peak behavior, since it includes the average acceleration value of the underlying acceleration curve over the given time interval from $t_i$ to $t_{i+1}$.

In an embodiment, the average acceleration is the average value of the underlying acceleration curve between two consecutive time points. This average acceleration is calculated using the velocities at a start point $t_i$ and end point $t_{i+1}$ for a given time window and the timespan $\Delta t = t_{i+1} - t_i$ for the time window. Consequently, such an embodiment does not require values within the time window to calculate the continuous average acceleration.

In an embodiment, the sensitivity of the average acceleration is calculated with respect to a given design variable $x_j$. According to an embodiment, the sensitivities of the average accelerations are applied in a mathematical iterative design optimization in accordance with principles knowns to those of skill in the art.

As described herein the continuous average acceleration is a function of the velocities at a start point $t_i$ and endpoint $t_{i+1}$. Thereby, the sensitivity of the continuous average acceleration, according to an embodiment, is a function of the sensitivity for the velocity at the start point $t_i$ and the endpoint $t_{i+1}$ as shown in the following:

$$\frac{d\bar{a}(t_i)}{dx_j} \;=\; \frac{\dfrac{dv(t_{i+1})}{dx_j} - \dfrac{dv(t_i)}{dx_j}}{t_{i+1} - t_i}$$

As shown, the sensitivities are mathematically equivalent to the total derivatives. The references [1] - [21] are often associated with applications to structural mechanics and, likewise, embodiments can be employed for structural mechanics applications. However, it is noted that embodiments are not limited to structural mechanics, but rather have full generality, and can be applied for any application involving accelerations. The sensitivities of both accelerations and velocities can be calculated using finite difference, semi-analytical, and analytical approaches. References [1], [2], [3], [15], [16], and [17] address sensitivities for transient and dynamic modeling.

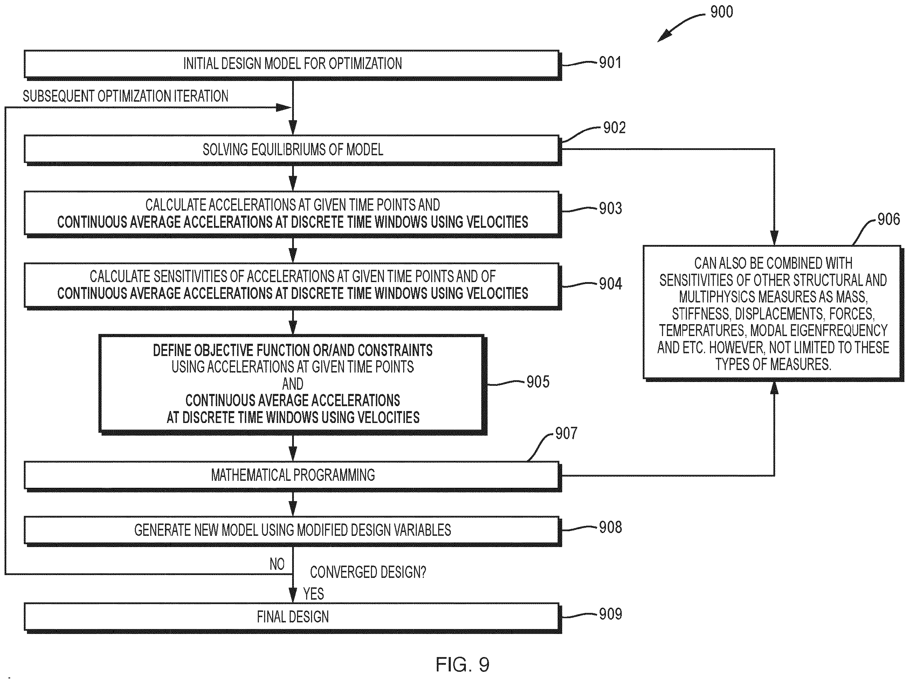

The optimization flowchart in FIG. 9 shows an iterative design process 900 based upon sensitivities according to an embodiment. The optimization process 900 includes the continuous average accelerations using velocities of a transient structural analysis. Additionally, the sensitivities of the velocities are calculated and thereby, also the sensitivities of the continuous average accelerations are included in the process 900.

The process 900 begins with defining, or otherwise obtaining, a model indicating an initial, i.e., unoptimized, design of the object at step 901. At step 902 equilibriums of the model are solved. To continue, accelerations at given discrete time points and the continuous average accelerations are calculated 903 using the velocities of the equilibrium 902 for given time windows.

Additionally, the sensitivities of the velocities are calculated at step 904 with respect to the design variables and, these velocity sensitivities are used to calculate the sensitivities of the continuous average accelerations with respect to design variables are. References [1], [2], [3], [15], [16], and [17] address sensitivities for transient and dynamic modeling and describe sensitivity calculation methodologies that may be employed at step 904.

To continue, the accelerations at given discrete time points and the continuous average accelerations are applied at step 905 to define the full or a part of an optimization setup for the objective function and/or constraints.

To continue, the discrete accelerations and the continuous average acceleration measures, and other possible measure(s) are then applied for defining an optimization problem consisting of constraints which must be fulfilled, and an objective function which is optimized (minimized or maximized). The optimization problem is solved using mathematical programming 907, i.e., optimization computation. According to an embodiment, the mathematical programming is strictly based upon the values of the user defined design targets, measures, and their sensitivities. Moreover, in an embodiment the discrete accelerations and the continuous average acceleration optimization can be combined with other measures 906 for which sensitivities are present at step 907. Example measures that may be utilized are direct measures of the model (e.g., mass, center of gravity, etc.), or measures determined by results of a structural and/or a multiphysics solution for an equilibrium of the model (e.g., stresses, displacements, forces, modal eigenfrequencies, temperatures, etc.).

In mathematics, computer science, and operations research mathematical programming is alternatively named mathematical optimization or simply optimization and is a process of the selection of a best solution (with regard to some criterion) from some set of available alternatives. Embodiments of the method 900 may use any such mathematical programming as is known in the art.

After the mathematical programming at step 907, a new physical model for the next optimization iteration is generated at step 908 based upon the design variables found at step 907. The iterative design process is a process of the selection of a new improved solution (with regard to some objective and constraints) per optimization iteration. Sometimes the design variables determined at step 907 and the physical model variables that are updated at step 908 might be the same, as for example thickness design variables for sizing optimization, but might also be different, for example density topology optimization where the design variables are relative densities that are mapped to the physical densities. In an example embodiment where physical model variables and design domain variables are the same, the physical model at step 908 is simply obtained as an output of the mathematical programming 907. Otherwise at step 908, the design variables are interpreted as physical model variables through the use of filters, as is known in the art.

If the model determined at step 908 has converged to some, e.g., user-defined, criteria, the process 900 moves to step 909, having achieved a final optimized design of the real-world object. If the optimization has not converged, a new optimization iteration is started and the method 900 returns step 902 and repeats steps 902 - 908 with the updated model (from step 908. The optimization workflow 900 outputs the final design at step 909 when the optimization has converged. In an embodiment, the optimization workflow 900 is converged when convergence criteria for a change in objective is, e.g., less than 0.1%, and the change in design variables is less than, e.g., 0.5%. If the determined continuous average acceleration design responses and their sensitivities in are not applied at step 905, then frequently, additional optimization iterations are required and/or a local suboptimal minima design is determined.

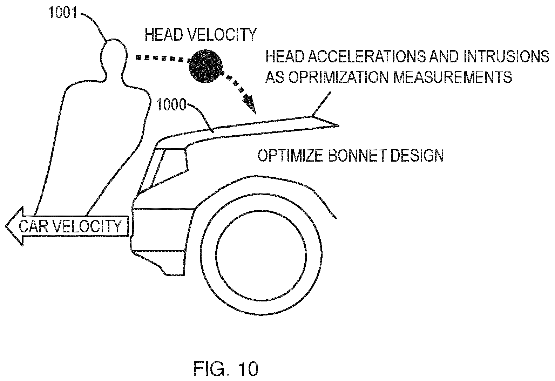

The continuous average accelerations and methods described herein, e.g., 440 and 900, can be applied in many different optimization scenarios. FIG. 10 is a representative example which demonstrates the continuous average accelerations applied for a crashworthiness optimization of bonnet 1000 for a pedestrian head 1001 impact. The overall target is to minimize the maximum accelerations in time for the head 1001 by optimizing the structural layout of the bonnet 1000, and at the same time constraining the intrusion of the head 1001 into the structure (bonnet 1000) measured by displacement in time. The following description in relation to FIGs. 11 - 19 outline an example optimization of the environment of FIG. 10 implemented using embodiments described herein, e.g., the methods 440 or 900.

FIG. 11 is a plot 1100 showing the acceleration curves 1 101a-c for a given design versus the displacement intrusion 1102 of the head 1001, for three different structural designs for the bonnet 1000 shown in FIG 10. If the structural bonnet 1000 design is too stiff, then the accelerations are too high for the head 1001. If the structural bonnet design 1000 is too soft and thereby, highly flexible, then the intrusion displacements are too high for the head. Thus, the optimization should yield a feasible design where the intrusion displacements 1102 are constrained to a sudden maximal allowable intrusion displacement and the maximum accelerations are minimized.

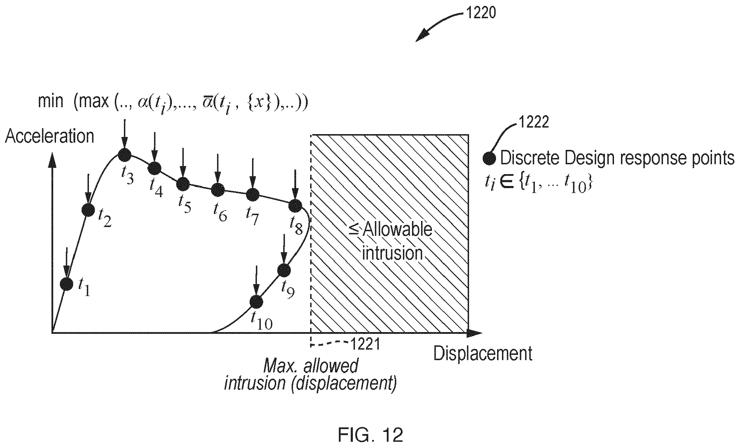

In an experimental optimization setup of the environment of FIG. 10, the discrete accelerations in time, and the continuous average accelerations in time, are formulated using the so-called MIN-MAX formulation (*See,* [18], [19]) where the objective function consists of $I$ discrete accelerations $a(t_i)$, and of $I$-1 continuous average accelerations $\bar{a}(t_i)$. Using this formulation allows the user to simultaneously minimize the largest value of the discrete accelerations $a(t_i)$ and the continuous average accelerations $\bar{a}(t_i)$, as shown by the plot 1220 in FIG. 12. FIG. 12 illustrates the inclusion of additional discrete design response points 1222 so that the design iterations may determine the optimized design where the targeted maximum acceleration is minimized, and the targeted maximum allowed intrusion 1221 is not breached. The displacement constraints $u(t_i)$ are constrained by $u_i^*$ ensuring that the maximal allowed intrusion 1221 of the head 1001 into the structure is not exceeded. The design variables $x_k \in \{x\}$ have an upper $x_{k,max}$ and lower bound $x_{k,min}$ where the vector $\{x\}$ contains all the design variables, and $K$ is the number of design variables. The structural nonlinear equilibrium (*See,* [20]) is fulfilled, so the residual $\{R\}$ is zero for all discrete times $t_i$. Thus, the optimization formulation is written as:

$$\min_{\{x\}} \left( \max \left( a\left(t_1,\{x\}\right), \ldots, a\left(t_i,\{x\}\right), \ldots, a\left(t_I,\{x\}\right), \bar{a}\left(t_1,\{x\}\right), \ldots, \bar{a}\left(t_i,\{x\}\right), \ldots, \bar{a}\left(t_{I-1},\{x\}\right) \right) \right)$$

s.t.

$$u\left(t_i,\{x\}\right) \leq u^*$$

where i = 1, 2,..., $I$

$$x_{k,\min} \leq x_k \leq x_{k,\max}$$

where $k$ = 1, 2, ..., $K$

$$\{R(t_i,\{x\})\} = \{0\}$$

where i = 1, 2, ..., $I$

The above MIN-MAX formulation is solved as a standard optimization problem in which the objective function is remodeled into a set of constraints, using the bound formulated as shown in References [18], and [19]. The non-parametric design variables {x} are updated using an iterative optimization design workflow, e.g., 900, implemented using References [20] and [21], where a sensitivity based optimization methodology is applied using mathematical programming. The sensitivities are calculated using the adjoint sensitivity method (*See,* [15], [16], and [17]) and implemented in the kernel of Reference [20].

For the finite element model of the structural equilibrium {R}, the nonlinearities can be included in the finite element model, such as large deformations, nonlinear constitutive materials and contact, being integrated in the finite element solver of Reference [20].

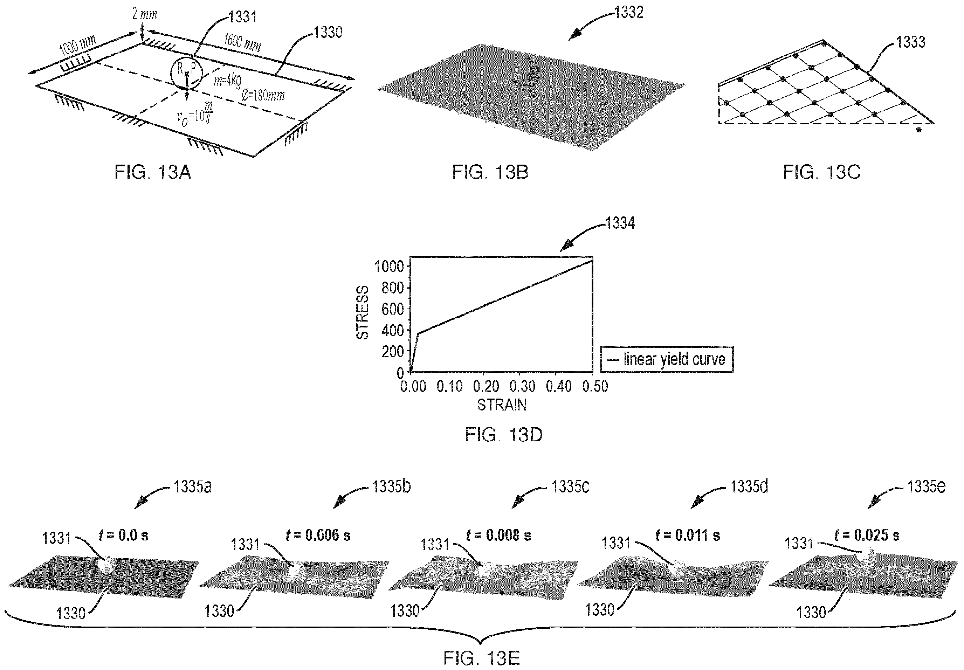

FIGs. 13A-E further illustrate an optimization of the head 1001 and bonnet 1000 environment of FIG. 10 implemented using embodiments. FIG. 13A depicts a simplified flat plate 1330 and rigid spherical mass 1331 model that is a representative simplified example for optimizing the design of the bonnet 1000 (represented by the plate 1330), with respect to a pedestrian head 1001 (represented by the rigid spherical mass 1331) impact, for a given initial velocity of 10m/s. The continuum finite model 1332 (element type C3D8 in Reference [20]) is shown in FIG. 13B. The continuum finite model 1332 includes boundary conditions and nodes, where positions of the nodes at a bottom surface (opposite to the contact surface for the head impact) are the nodal design variables, e.g., 1333, shown in FIG 13C. The material modeling is elastoplastic, and is given by the plot 1334 shown in FIG 13D, for the plate 1330, and the head 1331 is modeled using rigid elements. The accelerations at the center of the head 1331 are applied for the non-parametric optimization. An introduction to standard non-parametric shape optimization is given in Reference [21]. FIGs. 13E are depictions 1335a-e showing the head 1331 impact deformation of the initial plate (i.e., before the iterative optimization process) 1330 at times 0.0 sec (1335a), 0.006 sec (1335b), 0.008 sec (1335c), 0.011 sec (1335d), and 0.025 sec (1335e).

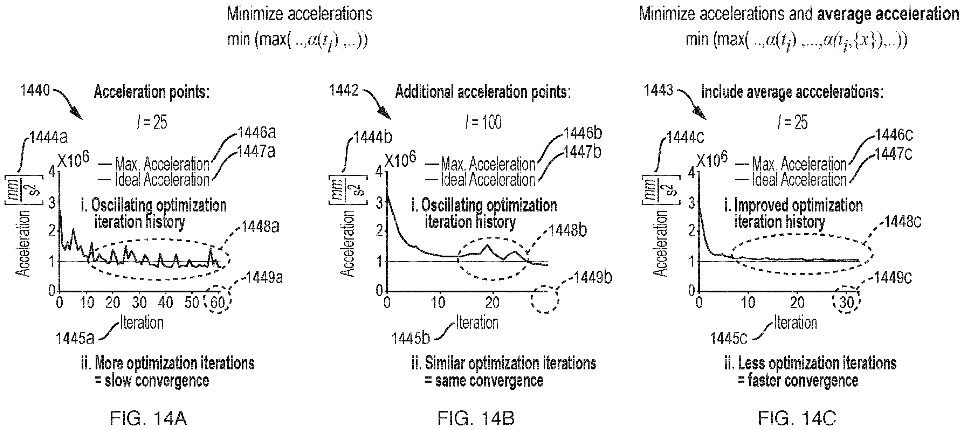

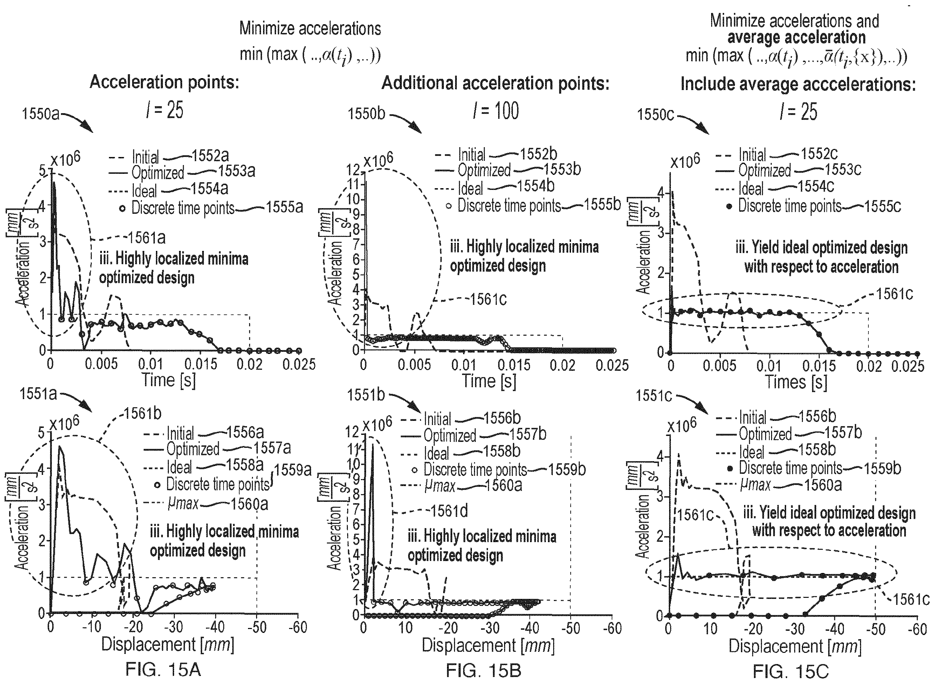

The analytical "ideal" theoretical constant accelerations are shown in FIGs. 14A - 14C, and FIGs. 15A - 15C. The analytical "ideal" theoretical constant acceleration is calculated for the given displacement intrusion constraint (e.g., *See* Reference [2]) assuming that the kinetic energy is absorbed by mechanical work, so the acceleration is constant in time. This analytical "ideal" theoretical constant acceleration is used herein as a reference to illustrate performance of the optimization formulations and corresponding optimized designs determined using embodiments.

FIGs. 14A-C illustrate three optimization setups for optimizing a design of the bonnet 1000 and head 1001 impact to minimize the maximum accelerations that were tested to illustrate benefits of embodiments. The three optimization set-ups were defined in the following plots: 1440 acceleration points, *I*=25; 1442 additional acceleration points, *I*=100; and 1443 including average acceleration (in accordance with embodiments described herein) and acceleration points, *I*=25. Results for these three different optimization set-ups are shown across FIGs. 14A-C, 15A-C, and 16A-C.

Specifically, plots 1440, 1442, and 1443 illustrate the process of minimizing the maximum accelerations though the iterative optimization methods described herein. The plots 1440, 1442, and 1443 depict the maximum acceleration 1444a-c per each design iteration 1445a-c and illustrate the effects between simply adding additional acceleration points (plot 1442 of FIG. 14B) versus using average accelerations in the optimization formula (plot 1443 of FIG. 14C), with respect to the speed of design convergence based on the number of optimization iterations. FIG. 14A depicts the maximum acceleration 1446a of the model 1440 using *I*=25 acceleration points, where the model shows an iteration history 1448a containing several high oscillations, and which takes 60 design iterations 1449a to converge the maximum accelerations 1446a with the ideal acceleration 1447a for the model. FIG. 14B illustrates that adding additional acceleration points in plot 1442 reduces the oscillation of the optimization iteration history 1448b, but requires a similar number of design iterations 1449b as plot 1443 for the maximum accelerations 1446b to converge with the ideal acceleration 1447b.

FIG. 14C, however, illustrates in plot 1443, that including the average accelerations into the optimization formula significantly reduces the oscillations in the iteration history 1448c, while simultaneously requiring a significantly smaller number of design iterations 1449c. Moreover, this leads to a significantly faster design convergence, where the maximum accelerations 1446c converge with the ideal accelerations 1447c within a smaller number of design iterations 1449c.

In sum, FIGs. 14A - 14C illustrate that an improved optimization iteration history leads to an improved simulation. When comparing the optimization iteration history of FIGs. 14A - 14B to that of 14C, it is clear that the approach of including continuous average accelerations yields an optimization iteration history having less and/or smaller oscillations in the accelerations during the optimization iterations; and yields a lower and/or same number of optimization iterations, and thereby, a faster convergence for achieving optimized designs.

FIGs. 15A - 15C further illustrate the benefits of including the average accelerations in the design optimization by plotting the accelerations of the model with respect to time in plots 1550a-c, and with respect to displacement in plots 1551a-c. FIGs. 15A - 15C illustrate the effects between increasing the number of acceleration points, and using average accelerations instead of simply adding additional acceleration points, with respect to the speed of design convergence in seconds as well as displacement. The three optimization set-ups utilized to achieve the results depicted in FIGs. 15A-15C were defined in the following plots: 1550a and 1551a acceleration points, $I=25$; 1550b and 1551b additional acceleration points, $I=100$; and 1550c and 1551c including average acceleration (in accordance with embodiments described herein) and acceleration points, $I=25$.

Specifically, plots 1550a and 1551a depict the maximum acceleration in time and in displacement, respectively, with acceleration points $I=25$, represented by the discrete time points 1555a and 1559a respectively. The plots 1550a and 1551a show the initial accelerations 1552a and 1556a, and the optimized accelerations 1553a and 1557a in comparison to the ideal designs 1554a and 1558a, where the optimized accelerations 1553a and 1557a become stuck in an area of highly localized minima optimization 1561a-b, and never reach the ideal designs 1554a and 1558a. Further, the optimized design 1557a never reaches the maximum allowed intrusion 1560a.

The addition of extra acceleration points, to $I=100$ 1555b and 1559b is illustrated in in plots 1550b and 1551b. The plots 1550b and 1551b show the initial accelerations 1552b and 1556b, and the optimized accelerations 1553b and 1557b in comparison to the ideal designs 1554b and 1558b. The addition of additional acceleration points 1555b and 1559b assist the model in reaching the ideal design 1554b and 1558b; however, the optimized design 1553b and 1557b still becomes stuck in an area of highly localized minima optimization 1561c-d. Further, the optimized design 1557b never reaches the maximum allowed intrusion 1560b.

Plots 1550c and 1551c in FIG. 15C however, illustrate that including the average accelerations into the optimization formula yields an ideal optimized design 1553c and 1557c, with respect to the accelerations. The plots 1550c and 1551c show the initial accelerations 1552c and 1556c and the optimized accelerations 1553c and 1557c in comparison to the ideal designs 1554c and 1558c. Moreover, while using the same number of acceleration points 1555c and 1559c as in plots 1550a and 1551a, where the average accelerations were not used and the optimized designs got stuck in an area of highly localized minima 1561a-b, the optimized design 1553c and 1557c quickly converge with ideal designs 1554c and 1558c, and do not get stuck in highly localized minima such as 1561a-d.

In sum, when comparing the accelerations of the optimized designs in FIGs. 15A and 15B to that of 15C, one sees that the approach of including continuous average accelerations yields a better optimized design 1553c and 1557c with respect to accelerations, where the optimized design 1553c and 1557c is not stuck in a highly localized minima 1561a-d. Thereby, the acceleration results in FIG. 15C are much closer to the analytical "ideal" constant acceleration 1554a-c. Additionally, plot 1551c shows an intrusion displacement constraint 1560c, whereas plots 1551a-b do not have an intrusion displacement constraint (the designs do not reach the constraints 1560a-b). Thereby, the design 1553c and 1557c for the optimized design using continuous average accelerations has better energy absorbing characteristics for the head impact event of FIG. 10.

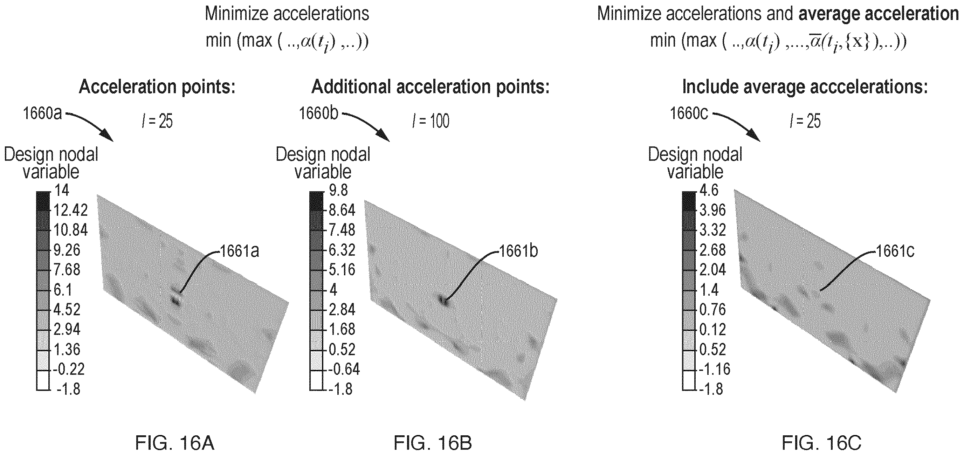

FIGs. 16A - 16C further illustrate the benefit of applying embodiments, namely, calculating average accelerations using velocities and including the average accelerations in the optimization formula. The plots 1660a-c illustrate the nodal non-parametric shape for optimized designs determined using respective optimization set-ups defined as follows: 1660a acceleration points, $I=25$; 1660b additional acceleration points, $I=100$; and 1660c including average acceleration (in accordance with embodiments described herein) and acceleration points, $I=25$.

Improved material layout of the optimized design leads to an improved optimized design. Based off the acceleration and displacement design responses from FIGs. 15A - 15B, FIGs. 16A - 16B illustrate a nodal non-parametric shape for the optimized designs using acceleration points $I=25$ and $I=100$, respectively. As shown in FIGs. 16A - 16B, these designs have highly localized lumped material design allocation 1661a-b just below the location where the head is impacting the plate, which is a highly local minima. FIG. 16C, however, illustrates the nodal non-parametric shape 1660c for the optimized design which includes the average accelerations. Plot 1660c has no lumped material design allocated at the location 1661c where the head is impacting the plate, and as such, is an overall better design. Consequently, FIGs. 14C, 15C and 16C show that the approach of including continuous average accelerations in the transient optimization formulation for the head impact avoids many local minima during the optimization history, and yields better designs with respect to crashworthiness properties such as accelerations and intrusion. Thereby, the inventive approaches described herein can reduce the effect upon the optimization of the physical and numerical noises (higher order highly localized oscillations) in the accelerations and the corresponding acceleration sensitivities.

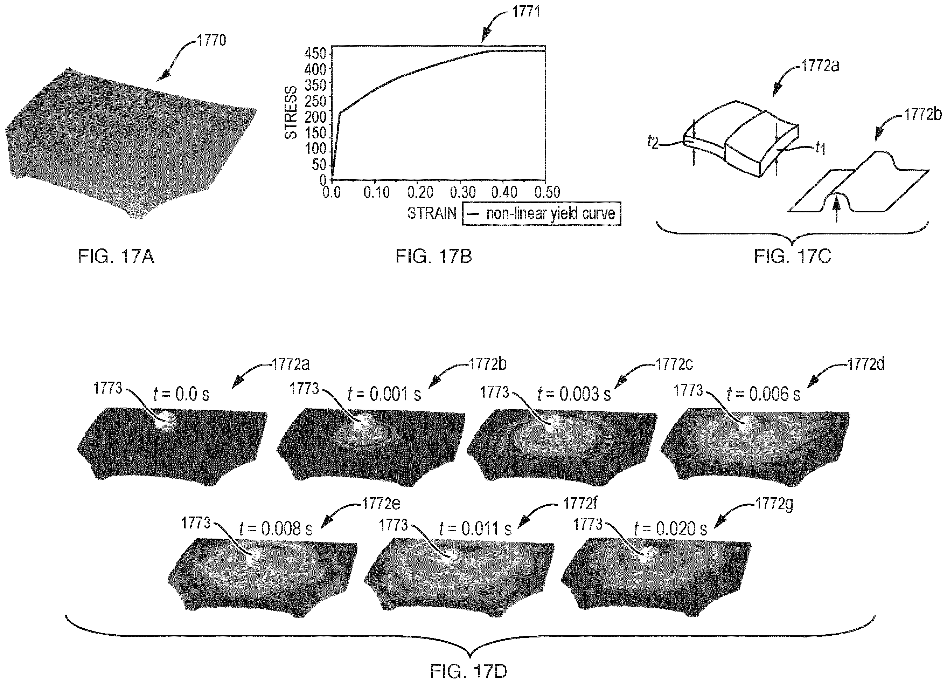

FIG. 17A shows an industrial bonnet 1770 for head impact optimization, where the bonnet consists of shell elements (element type S4 and S3R in Reference [20]). The material modeling is elastoplastic, and is given by the plot 1771 shown in FIG 17B, for the plate bonnet 1770. Two non-parametric optimization types are applied as shown in FIG. 17C. The first non-parametric optimization type uses sizing shell thickness optimization 1772a (e.g., manufactured using tailored blanks), where the thickness of each finite element ($t_1$ and $t_1$) is a design variable. The second non-parametric optimization type uses bead shell nodal optimization 1772b (e.g., manufactured using stamping), where positions of nodes in the finite element model are the design variables. Reference [21] describes an introduction to standard non-parametric sizing and bead optimization.

FIG. 17D are depictions 1772a-g showing the head 1773 impact deformation of the initial plate 1770 where the accelerations and the continuous average accelerations at the center of the head ($I=80$) are applied for both the thickness sizing 1772a and the nodal bead optimization 1772b at times 0.0 sec (1772a), 0.001 sec (1772b), 0.003 sec (1772c), 0.006 sec (1772d), 0.008 sec (1772e), 0.011 sec (1772f) and, 0.020 sec (1772g).

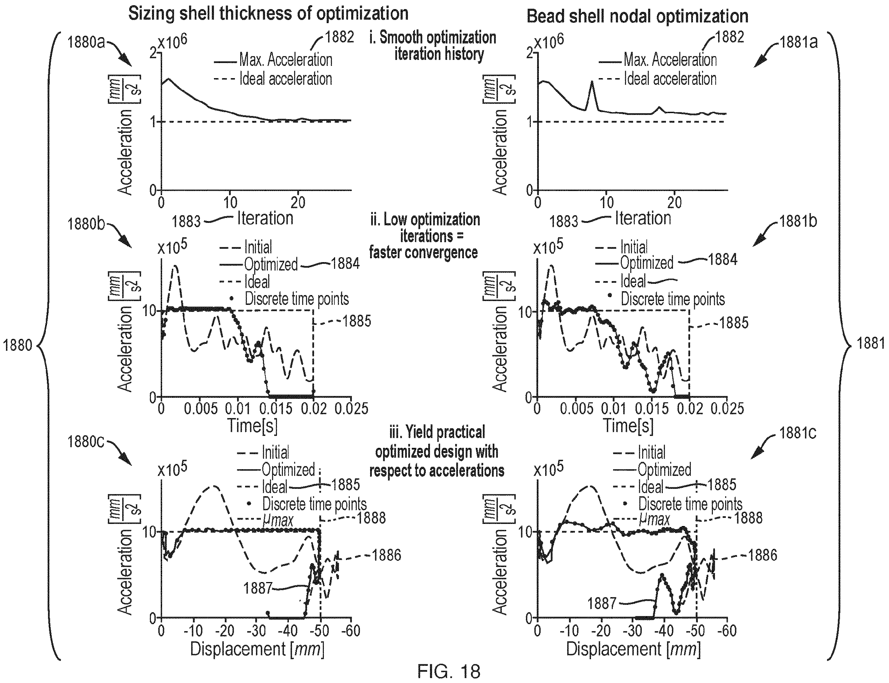

FIG. 18 shows the optimization iteration history when minimizing the maximum accelerations for sizing 1880 and bead optimization 1881, respectively. A stable optimization iteration history for both optimization types 1880 and 1881 is shown. Plots 1880a (shell sizing thickness optimization) and 1881a (bead shell nodal optimization) show the maximum accelerations 1882 at each optimized design iteration 1883. Additionally, FIG. 18 shows the optimized accelerations 1884 as a function of both time (plots 1880b and 1881b), as well as displacements (plots 1880c and 1881c). The optimized accelerations 1884 for both optimization types 1880b-c and 1881b-c are very close to the "ideal" 1885 theoretical constant accelerations calculated using the approach in Reference [2]. Furthermore, the intrusion displacement constraints are violated for the initial design 1886, but the constraints are later fulfilled during the optimization iterations, and active for both the final optimized designs 1887. Thereby, the approach of including continuous average accelerations for both designs 1880 and 1881 has active intrusion displacement constraints 1888 and as such has beneficial energy-absorbing characteristic for the head impact event.

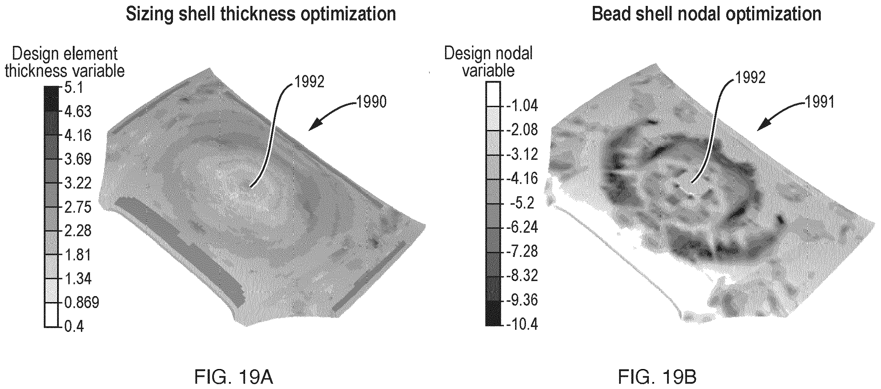

The optimized design 1990 for sizing elemental thickness design variables is shown in FIG. 19A, and the optimized design 1991 for bead nodal design variables is shown in FIG. 19B. Thus, the approach for continuous average accelerations in sensitivity optimization work well for different design variable types. Plates 1990 and 1991 have no lumped material design allocated at the location 1992, where the head is impacting the plate, and thereby, results in an overall better design compared to those that can be achieved using existing methods.

Embodiments provide significant benefits for optimization formulations through the calculation and inclusion of, continuous average accelerations using velocities, in optimization problems and solving these problems using an iterative design process based upon sensitivities and mathematical programming.

For example, one benefit is easier pre-processing and post-processing in the userinterface. Design responses for average accelerations are only defined by the user at the beginning time point, and at the end time point, for the time window for which the average acceleration is calculated. This means there are less pre-processing considerations by the user, i.e., less considerations by the user regarding the number of acceleration points for the simulation modeled in a given time window for determining the average acceleration; and easier post-processing of the optimized results.

Another example is improved simulations. This is shown by better or similar optimization iteration history, i.e., there are less oscillations for the optimization iterations. Further, less optimization iterations, or the same optimization iterations, for achieving a converged design means faster convergence and less usage of computational resources. Further still, velocities and their sensitivities are only required to be calculated at the beginning time point and at the end time point for the time window for which the average acceleration is calculated. This means there is less usage of computational storage and runtime for computing design response values and sensitivities; and optimization is less effected by the number of discrete time points, and their location in time, of the simulation for which the accelerations are calculated as acceleration averages are applied. Thus, the time discretization as a number of time points and location of these time points inside the time window has less influence upon the optimization iteration history and the final optimized design.

Another example is improved optimized designs. Avoiding local minima during the optimization history means improved objective function values for average accelerations, and easier enforcement of average acceleration constraints. Further, improved optimization designs yield better or similar designs with respect to crashworthiness properties, meaning overall lower accelerations of final optimized design, and better fulfillment of intrusion requirements of the final optimized design.

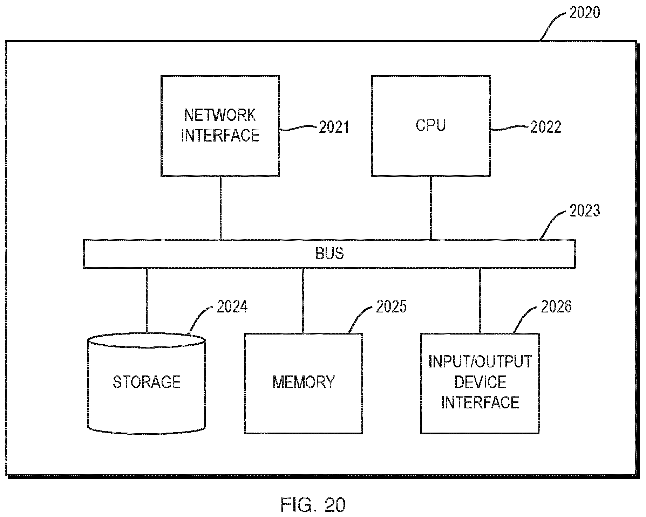

FIG. 20 is a simplified block diagram of a computer-based system 2020 that may be used to determine the continuous average accelerations of a computer-based model using the velocities at the start and end point of a given time window according to any variety of embodiments described herein. The system 2020 comprises a bus 2023. The bus 2023 serves as an interconnect between the various components of the system 2020. Connected to the bus 2023 is an input/output device interface 2026 for connecting various input and output devices such as a keyboard, mouse, display, speakers, etc. to the system 2020. A central processing unit (CPU) 2022 is connected to the bus 2023 and provides for the execution of computer instructions implementing embodiments. Memory 2025 provides volatile storage for data used for carrying out computer instructions implementing embodiments described herein, such as the methods 440 and 900 previously described in relation to FIGs. 4 and 9, respectively. Storage 2024 provides non-volatile storage for software instructions, such as an operating system (not shown) and embodiment configurations, etc. The system 2020 also comprises a network interface 2021 for connecting to any variety of networks known in the art, including wide area networks (WANs) and local area networks (LANs).

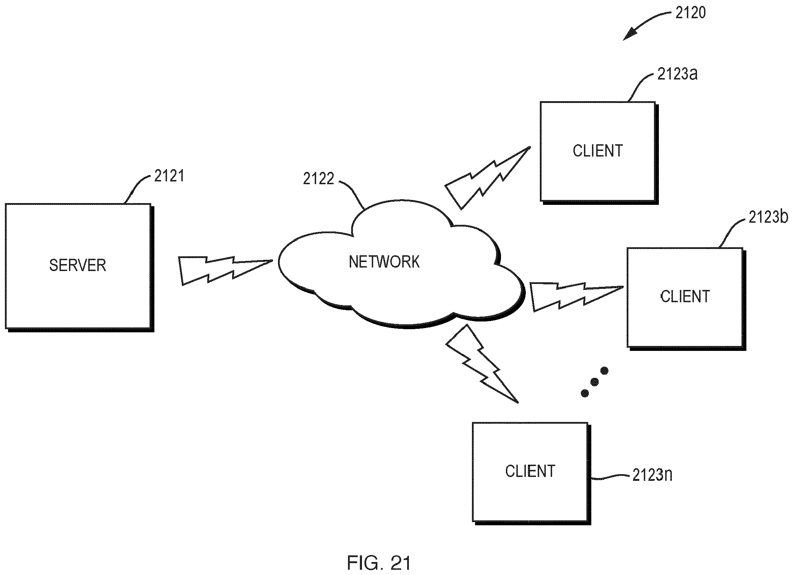

It should be understood that the example embodiments described herein may be implemented in many different ways. In some instances, the various methods and machines described herein may each be implemented by a physical, virtual, or hybrid general purpose computer, such as the computer system 2020, or a computer network environment such as the computer environment 2120, described herein below in relation to FIG. 21. The computer system 2020 may be transformed into the machines that execute the methods described herein, for example, by loading software instructions into either memory 2025 or non-volatile storage 2024 for execution by the CPU 2022. One of ordinary skill in the art should further understand that the system 2020 and its various components may be configured to carry out any embodiments or combination of embodiments described herein. Further, the system 2020 may implement the various embodiments described herein utilizing any combination of hardware, software, and firmware modules operatively coupled, internally, or externally, to the system 2020. Further, the system 2020 may be communicatively coupled to or be embedded within a manufacturing device so as to control the device to create a physical object as described herein.

FIG. 21 illustrates a computer network environment 2120 in which an embodiment of the present invention may be implemented. In the computer network environment 2120, the server 2121 is linked through the communications network 2122 to the clients 2123a-n. The environment 2120 may be used to allow the clients 2123a-n, alone or in combination with the server 2121, to execute any of the methods described herein. For nonlimiting example, computer network environment 2120 provides cloud computing embodiments, software as a service (SAAS) embodiments, and the like.

Embodiments or aspects thereof may be implemented in the form of hardware, firmware, or software. If implemented in software, the software may be stored on any nontransient computer readable medium that is configured to enable a processor to load the software or subsets of instructions thereof. The processor then executes the instructions and is configured to operate or cause an apparatus to operate in a manner as described herein.

Further, firmware, software, routines, or instructions may be described herein as performing certain actions and/or functions of the data processors. However, it should be appreciated that such descriptions contained herein are merely for convenience and that such actions in fact result from computing devices, processors, controllers, or other devices executing the firmware, software, routines, instructions, etc.

It should be understood that the flow diagrams, block diagrams, and network diagrams may include more or fewer elements, be arranged differently, or be represented differently. But it further should be understood that certain implementations may dictate the block and network diagrams and the number of block and network diagrams illustrating the execution of the embodiments be implemented in a particular way.

Accordingly, further embodiments may also be implemented in a variety of computer architectures, physical, virtual, cloud computers, and/or some combination thereof, and thus, the data processors described herein are intended for purposes of illustration only and not as a limitation of the embodiments.

While example embodiments have been particularly shown and described, it will be understood by those skilled in the art that various changes in form and details may be made therein without departing from the scope of the embodiments encompassed by the appended claims.

The teachings of all patents, published applications and references cited herein are incorporated by reference in their entirety.

References

[1] Pedersen, C.B.W. (2004). Crashworthiness Design of Transient Frame Structures using Topology Optimization, Computer Methods in Applied Mechanics and Engineering, 193(6-8): 653-678.
[2] Pedersen, C.B.W. (2002). On topology design of frame structures for crashworthiness. PhD thesis, Publisher Danish Center for Applied Mathematics and Mechanics. Technical University of Denmark.

[3] Pedersen, C.B.W. (2002). Topology Optimization of Energy Absorbing Frames. WCCMV - Fifth World Congress on Computational Mechanics, Vienna, Austria.

[4] Kim, Y., Park, G. (2010). Nonlinear dynamic response structural optimization using equivalent static loads. Computer Methods in Applied Mechanics and Engineering. 199(9-12): 660-676.

[5] Jeong S., Yoon S., Xu S., Park G. (2010). Non-linear dynamic response structural optimization of an automobile frontal structure using equivalent static loads. Proceedings of the Institution of Mechanical Engineers, Part D: Journal of Automobile Engineering. 224(4):489-501.

[6] Yoon J., Lee Y., Park S., Han Y., Park G. (2019). Crash optimization considering the head injury criterion. Proceedings of the Institution of Mechanical Engineers, PartD: Journal of Automobile Engineering. 233(11):2879-2890.

[7] Stolpe, M., Verbart, A., Labanda, S. R. (2018). The equivalent static loads method for structural optimization does not in general generate optimal designs. Structural and Multidisciplinary Optimization, 58(1): 139-154.

[8] Roux, W., Yi, G., Gandikota, I. (2020). A spatial kernel approach for topology optimization. Computer Methods in Applied Mechanics and Engineering. 361(1):112794.

[9] Gandikota, I., Roux, W., Yi, G. (2021). Topology optimization of an automotive hood for multiple load cases and disciplines. Conference: 13th European LS-DYNA Conference 2021, Ulm, Germany.

[10] Gandikota, I., Yi, G., Roux, W. (2019). Crashworthiness and lightweight optimization of an automotive crash box using LS-TaSC. FEA Information Engineering Solutions. October 2019.

[11] Bujny, M., Aulig, N., Olhofer, M., Duddeck, F. (2018). Identification of optimal topologies for crashworthiness with the evolutionary level set method. International Journal of Crashworthiness 23(4): 395-416.

[12] Pedersen, N.L. (1998). Shape optimizing of a sleeping policeman". Trafik dage på Aalborg Universitet, Aalborg, Denmark.

[13] Pedersen, N.L. (1998). Shape Optimization of a Vehicle Speed Control Bump, Journal of Structural Mechanics, 26(3): 319-342.

[14] Diehl, T., Carroll, D., Nagaraj, B. (2000). Applications of DSP to explicit dynamic FEA simulations of elastically-dominated impact problems, Shock and Vibration, 7(3):167-177.

[15] Kleiber, M., Antunez, H., Hien, T. D. and Kowalczyk, P. (1997). Parameter Sensitivity in Nonlinear Mechanics, Theory and Finite Element Computations, John Wiley and Sons.

[16] Choi, K. K. and Kim, N. H (2005). Structural Sensitivity Analysis and Optimization 2: Nonlinear Systems and Applications, Springer-Verlag New York Inc.

[17] Michaleris, P., Tortorelli, D. A. and Vidal, C. A. (1994). Tangent Operators and Design Sensitivity Formulations for Transient Non-linear Coupled Problems with Applications to Elastoplasticity, International Journal for Numerical Methods in Engineering 37: 2471-2499.

[18] Taylor, J.E. and Bendsøe, M.P. (1984). An interpretation of min-max structural design problems including a method for relaxing constraints. International Journal of Solids and Structures. 20: 301-314.

[19] Olhoff. N. (1989). Multicriterion structural optimization via bound formulation and mathematical programming. Structural Optimization. 1:11-17.

[20] Abaqus. (2021). SIMULIA User Assistance. Dassault Systèmes.

[21] Tosca. (2021). SIMULIA User Assistance. Dassault Systèmes.

## Claims

1. A computer-implemented method of automatically determining an optimized design of a real-world object, the method comprising, by a processor:

   defining, in memory of the processor, a computer-based model representing the real-world object;
   using the defined computer-based model, determining equilibriums of the real-world object for each of a plurality of time steps, wherein determining the equilibriums determines velocities of the real-world object across the plurality of time steps;
   for each of a plurality of time windows defined across the plurality of time steps, determining average acceleration using the determined velocities;
   calculating sensitivity of each determined average acceleration using sensitivities of the determined velocities;
   using each determined average acceleration, defining at least one of: a constraint and an objective function; and
   using the calculated sensitivity of each determined average acceleration, iteratively optimizing the computer-based model representing the real-world object with respect to the defined at least one of the constraint and the objective function, the iteratively optimizing resulting in an updated computer-based model representing the optimized design of the real-world object.

2. The method of claim 1, wherein the computer-based model is a finite element model, a boundary element method, a finite difference method, a finite volume method, or a discrete element method.

3. The method of claim 1 or 2, wherein for a given time window of the plurality of time windows, determining the average acceleration using the determined velocities comprises:

from amongst the determined velocities, identifying (i) velocity at a start point of the given time window and (ii) velocity at an end point of the given time window; and
calculating the average acceleration for the given time window using (i) the identified velocity at the start point, (ii) the identified velocity at the end point, and (iii) a length, in time, of the given time window.

4. The method of claim 3, wherein calculating sensitivity of the average acceleration for the given time window comprises:
calculating the sensitivity of the average acceleration for the given time window, with respect to a given design variable, using the identified velocity at the start point and the identified velocity at the end point.

5. The method of any one of claims 1 to 4, further comprising:
using the calculated sensitivity of each determined average acceleration and at least one of: discrete accelerations, sensitivities of a structural measure, and sensitivities of a multi-physics measure in the iteratively optimizing the computer-based model.

6. The method of any one of claims 1 to 5, further comprising:

receiving a user defined requirement; and
using both the user defined requirement and each determined average acceleration in the defining at least one of: the constraint and the objective function.

7. The method of any one of claims 1 to 6, wherein the real-world object represented by the computer-based model is an automobile, a plane, an electronic device, a medical instrument, or armor.

8. A system for automatically determining an optimized design of a real-world object, the system comprising:

a processor; and
a memory with computer code instructions stored thereon, the processor and the memory, with the computer code instructions being configured to cause the system to perform the method of any one of claims 1 to 7.

9. A non-transitory computer program product for automatically determining an optimized design of a real-world object, the computer program product executed by a server in communication across a network with one or more clients and comprising:
a computer readable medium, the computer readable medium further comprising program instructions which, when executed by a processor, cause the processor to perform the method of any one of claims 1 to 7.

10. A computer program product comprising program instructions which, when executed by a processor, cause the processor to perform the method of any one of claims 1 to 7.

$E = 2.0*10^{11} \text{N/m}^2 \sigma_0 = 5.1*10^8 \text{ N/m}^2 \ h'=0.10E$

FIG. 1

FIG. 2B

FIG. 2A

FIG. 3

EP 4 394 644 A1

440

DEFINE IN MEMORY OF THE PROCESSOR, A COMPUTER-BASED
MODEL REPRESENTING THE REAL-WORLD OBJECT
441

USING THE DEFINED COMPUTER-BASED MODEL, DETERMINE EQUILIBRIUMS
OF THE REAL-WORLD OBJECT FOR EACH OF A PLURALITY OF TIME STEPS,
WHEREIN DETERMINING THE EQUILIBRIUMS DETERMINES VELOCITIES
OF THE REAL-WORLD OBJECT ACROSS THE PLURALITY OF TIME STEPS
442

FOR EACH OF A PLURALITY OF TIME WINDOWS DEFINED ACROSS THE
PLURALITY OF TIME STEPS, DETERMINE AVERAGE ACCELERATION
USING THE DETERMINED VELOCITIES
443

CALCULATE SENSITIVITY OF EACH DETERMINED AVERAGE ACCELERATION
USING SENSITIVITIES OF THE DETERMINED VELOCITIES
444

USING EACH DETERMINED AVERAGE ACCELERATION, DEFINE AT LEAST
ONE OF: A CONSTRAINT AND AN OBJECTIVE FUNCTION
445

USING THE CALCULATED SENSITIVITY OF EACH DETERMINED AVERAGE
ACCELERATION, ITERATIVELY OPTIMIZE THE COMPUTER-BASED MODEL
REPRESENTING THE REAL-WORLD OBJECT WITH RESPECT TO THE DEFINED
AT LEAST ONE OF THE CONSTRAINT AND THE OBJECTIVE FUNCTION,
THE ITERATIVELY OPTIMIZING RESULTING IN AN UPDATED COMPUTER-BASED
MODEL REPRESENTING THE OPTIMIZED DESIGN OF THE REAL-WORLD OBJECT
446

FIG. 4

EP 4 394 644 A1

FIG. 5

Acceleration

660

Time window

604

601

$\overline{a}(t_i)$

$$\overline{a}(t_i) = \frac{v(t_{i+1}) - v(t_i)}{t_{i+1} - t_i}$$

$t_i$ $t_{i+1}$ Time

FIG. 6A

Velocity

661

Time window

604

602

603

$v(t_i)$

$v(t_{i+1})$

$t_i$ $t_{i+1}$ Time

FIG. 6B

## FIG. 7A

Average continuous accelerations

770a

Acceleration — 701a

Time window — 703a

n=1, 707a, 700a

$\overline{\alpha}(t_i)$

707b

$\begin{pmatrix} \alpha(t_i) \\ v(t_i) \end{pmatrix}$

n=N, 702a

$\begin{pmatrix} \alpha(t_{i+1}) \\ v(t_{i+1}) \end{pmatrix}$

$t_i$    $t_{i+1}$    Time

## FIG. 7B

Uniform distributed discrete time points

770b

Acceleration — 701b

Time window — 703b

n=1, 704c, 705a, 700b

702b, 704e, n=N, n=N-2

704a, n=2, 704d, 704b, 705b, n=N-1

$t_i$    $t_{i+1}$    Time

## FIG. 7C

Number of discrete time points

770c

Acceleration — 701c

Time window — 703c

n=1, 705a, 700c, n=N-2, 702c

n=2, 704h, 704g, 705d

704f, 704i, n=N-1, n=N

$t_i$    $t_{i+1}$    Time

## FIG. 7D

Uneven distributed discrete time points

770d

Acceleration — 701d

Time window — 703d

705f, 700d, 704l, n=N-2, 702d

n=1, n=2, 704j, 705e, 704k, 704m, n=N-1, 704n, n=N

$t_i$    $t_{i+1}$    Time

FIG. 8B

FIG. 8A

900

INITIAL DESIGN MODEL FOR OPTIMIZATION — 901

SUBSEQUENT OPTIMIZATION ITERATION

SOLVING EQUILIBRIUMS OF MODEL — 902

CALCULATE ACCELERATIONS AT GIVEN TIME POINTS AND
CONTINUOUS AVERAGE ACCELERATIONS AT DISCRETE TIME WINDOWS USING VELOCITIES — 903

CALCULATE SENSITIVITIES OF ACCELERATIONS AT GIVEN TIME POINTS AND OF
CONTINUOUS AVERAGE ACCELERATIONS AT DISCRETE TIME WINDOWS USING VELOCITIES — 904

DEFINE OBJECTIVE FUNCTION OR/AND CONSTRAINTS
USING ACCELERATIONS AT GIVEN TIME POINTS
AND
CONTINUOUS AVERAGE ACCELERATIONS
AT DISCRETE TIME WINDOWS USING VELOCITIES — 905

CAN ALSO BE COMBINED WITH
SENSITIVITIES OF OTHER STRUCTURAL AND
MULTIPHYSICS MEASURES AS MASS,
STIFFNESS, DISPLACEMENTS, FORCES,
TEMPERATURES, MODAL EIGENFREQUENCY
AND ETC. HOWEVER, NOT LIMITED TO THESE
TYPES OF MEASURES. — 906

MATHEMATICAL PROGRAMMING — 907

GENERATE NEW MODEL USING MODIFIED DESIGN VARIABLES — 908

NO    CONVERGED DESIGN?
      YES

FINAL DESIGN — 909

FIG. 9

24

FIG. 10

FIG. 11

$$\min \ (\max \ (.., \alpha(t_j),..., \overline{\alpha}(t_j \ , \ \{x\}),..))$$

FIG. 12

EP 4 394 644 A1

EP 4 394 644 A1

FIG. 13A

FIG. 13B

FIG. 13C

FIG. 13D

FIG. 13E

28

Minimize accelerations
$$\min(\max(..,\alpha(t_j),..))$$

Minimize accelerations and **average acceleration**
$$\min(\max(..,\alpha(t_j),...,\alpha(t_j,\{x\})),..))$$

1440 — **Acceleration points:**

$I = 25$

1444a

$X10^6$

$\left[\frac{mm}{s^2}\right]$

Acceleration

— Max. Acceleration — 1446a
— Ideal Acceleration — 1447a

i. **Oscillating optimization iteration history**

— 1448a

4
3
2
1
0

0  10  20  30  40  50  60

— 1449a

1445a — Iteration

ii. **More optimization iterations = slow convergence**

FIG. 14A

1442 — **Additional acceleration points:**

$I = 100$

1444b

$X10^6$

$\left[\frac{mm}{s^2}\right]$

Acceleration

— Max. Acceleration — 1446b
— Ideal Acceleration — 1447b

i. **Oscillating optimization iteration history**

— 1448b

4
3
2
1
0

0  10  20

— 1449b

1445b — Iteration

ii. **Similar optimization iterations = same convergence**

FIG. 14B

1443 — **Include average accelerations:**

$I = 25$

1444c

$X10^6$

$\left[\frac{mm}{s^2}\right]$

Acceleration

— Max. Acceleration — 1446c
— Ideal Acceleration — 1447c

i. **Improved optimization iteration history**

— 1448c

4
3
2
1
0

0  10  20  30

— 1449c

1445c — Iteration

ii. **Less optimization iterations = faster convergence**

FIG. 14C

Minimize accelerations
$$\min\left(\max\left(..,\alpha(t_j),..\right)\right)$$

Minimize accelerations and
**average acceleration**
$$\min\left(\max\left(..,\alpha(t_j),...,\bar{\alpha}(t_j,\{x\}),..\right)\right)$$

Acceleration points:

Additional acceleration points:

Include average acccelerations:

$I = 25$

$I = 100$

$I = 25$

FIG. 15A

FIG. 15B

FIG. 15C

Minimize accelerations
$$\min \left( \max \left( .., \alpha(t_j) ,.. \right) \right)$$

Minimize accelerations and **average acceleration**
$$\min \left( \max \left( .., \alpha(t_j) ,...,\overline{\alpha}(t_j,\{\mathbf{x}\}) ,.. \right) \right)$$

**Acceleration points:**

1660a — $I = 25$

Design nodal variable
| 14 |
| 12.42 |
| 10.84 |
| 9.26 |
| 7.68 |
| 6.1 |
| 4.52 |
| 2.94 |
| 1.36 |
| -0.22 |
| -1.8 |

— 1661a

FIG. 16A

**Additional acceleration points:**

1660b — $I = 100$

Design nodal variable
| 9.8 |
| 8.64 |
| 7.48 |
| 6.32 |
| 5.16 |
| 4 |
| 2.84 |
| 1.68 |
| 0.52 |
| -0.64 |
| -1.8 |

— 1661b

FIG. 16B

**Include average accelerations:**

1660c — $I = 25$

Design nodal variable
| 4.6 |
| 3.96 |
| 3.32 |
| 2.68 |
| 2.04 |
| 1.4 |
| 0.76 |
| 0.12 |
| 0.52 |
| -1.16 |
| -1.8 |

— 1661c

FIG. 16C

FIG. 17A

FIG. 17B

FIG. 17C

FIG. 17D

EP 4 394 644 A1

FIG. 18

## Sizing shell thickness optimization

Design element
thickness variable

5.1
4.63
4.16
3.69
3.22
2.75
2.28
1.81
1.34
0.869
0.4

1992
1990

FIG. 19A

## Bead shell nodal optimization

Design nodal
variable

-1.04
-2.08
-3.12
-4.16
-5.2
-6.24
-7.28
-8.32
-9.36
-10.4

1992
1991

FIG. 19B

FIG. 20

EP 4 394 644 A1

FIG. 21

Europäisches
Patentamt

European
Patent Office

Office européen
des brevets

# EUROPEAN SEARCH REPORT

Application Number

EP 23 22 0494

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PEDERSEN C B W: "Topology optimization for crashworthiness of frame structures", INTERNATIONAL JOURNAL OF CRASHWORTHINESS, WOODHEAD PUBLISHING, CA, vol. 8, no. 1, 1 January 2003 (2003-01-01), pages 29-39, XP019384684, ISSN: 1573-8965 * page 30 - page 33 * | 1-10 | INV. G06F30/23 |
| A | GUFLER VEIT ET AL: "A review of flexible multibody dynamics for gradient-based design optimization", MULTIBODY SYSTEM DYNAMICS, KLUWER, NL, vol. 53, no. 4, 22 October 2021 (2021-10-22), pages 379-409, XP037621988, ISSN: 1384-5640, DOI: 10.1007/S11044-021-09802-Z [retrieved on 2021-10-22] * 4 Design sensitivity analysis of flexible multibody systems * | 1-10 | |

**TECHNICAL FIELDS SEARCHED** (IPC)

G06F

The present search report has been drawn up for all claims

| Place of search | Date of completion of the search | Examiner |
|---|---|---|
| Munich | 17 May 2024 | Chabot, Pedro |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PEDERSEN, C.B.W.** Crashworthiness Design of Transient Frame Structures using Topology Optimization. *Computer Methods in Applied Mechanics and Engineering,* 2004, vol. 193 (6-8), 653-678
- On topology design of frame structures for crashworthiness. **PEDERSEN, C.B.W.** PhD thesis. Publisher Danish Center for Applied Mathematics and Mechanics. Technical University of Denmark, 2002
- **PEDERSEN, C.B.W.** Topology Optimization of Energy Absorbing Frames. *WCCMV - Fifth World Congress on Computational Mechanics, Vienna, Austria,* 2002
- **KIM, Y. ; PARK, G.** Nonlinear dynamic response structural optimization using equivalent static loads. *Computer Methods in Applied Mechanics and Engineering.,* 2010, vol. 199 (9-12), 660-676
- **JEONG S. ; YOON S. ; XU S. ; PARK G.** Non-linear dynamic response structural optimization of an automobile frontal structure using equivalent static loads. *Proceedings of the Institution of Mechanical Engineers, Part D: Journal of Automobile Engineering.,* 2010, vol. 224 (4), 489-501
- **YOON J. ; LEE Y. ; PARK S. ; HAN Y. ; PARK G.** Crash optimization considering the head injury criterion. *Proceedings of the Institution of Mechanical Engineers, PartD: Journal of Automobile Engineering.,* 2019, vol. 233 (11), 2879-2890
- **STOLPE, M. ; VERBART, A ; LABANDA, S. R.** The equivalent static loads method for structural optimization does not in general generate optimal designs. *Structural and Multidisciplinary Optimization,* 2018, vol. 58 (1), 139-154
- **ROUX, W. ; YI, G. ; GANDIKOTA, I.** A spatial kernel approach for topology optimization. *Computer Methods in Applied Mechanics and Engineering,* 2020, vol. 361 (1), 112794
- **GANDIKOTA, I. ; ROUX, W. ; YI, G.** Topology optimization of an automotive hood for multiple load cases and disciplines. *Conference: 13th European LS-DYNA Conference 2021, Ulm, Germany,* 2021
- **GANDIKOTA, I. ; YI, G ; ROUX, W.** Crashworthiness and lightweight optimization of an automotive crash box using LS-TaSC. *FEA Information Engineering Solutions,* October 2019
- **BUJNY, M. ; AULIG, N. ; OLHOFER, M. ; DUDDECK, F.** Identification of optimal topologies for crashworthiness with the evolutionary level set method. *International Journal of Crashworthiness,* 2018, vol. 23 (4), 395-416
- **PEDERSEN, N.L.** Shape optimizing of a sleeping policeman. Trafik dage på Aalborg Universitet, 1998
- **PEDERSEN, N.L.** Shape Optimization of a Vehicle Speed Control Bump. *Journal of Structural Mechanics,* 1998, vol. 26 (3), 319-342
- **DIEHL, T. ; CARROLL, D. ; NAGARAJ, B.** Applications of DSP to explicit dynamic FEA simulations of elastically-dominated impact problems. *Shock and Vibration,* 2000, vol. 7 (3), 167-177
- Parameter Sensitivity in Nonlinear Mechanics. **KLEIBER, M. ; ANTUNEZ, H. ; HIEN, T. D. ; KOWALCZYK, P.** Theory and Finite Element Computations. John Wiley and Sons, 1997
- Structural Sensitivity Analysis and Optimization 2. **CHOI, K. K. ; KIM, N. H.** Nonlinear Systems and Applications. Springer-Verlag New York Inc, 2005
- **MICHALERIS, P. ; TORTORELLI, D. A. ; VIDAL, C. A.** Tangent Operators and Design Sensitivity Formulations for Transient Non-linear Coupled Problems with Applications to Elastoplasticity. *International Journal for Numerical Methods in Engineering,* 1994, vol. 37, 2471-2499
- **TAYLOR, J.E. ; BENDSØE, M.P.** An interpretation of min-max structural design problems including a method for relaxing constraints. *International Journal of Solids and Structures.,* 1984, vol. 20, 301-314
- **OLHOFF. N.** Multicriterion structural optimization via bound formulation and mathematical programming. *Structural Optimization.,* 1989, vol. 1, 11-17
- **ABAQUS.** SIMULIA User Assistance. *Dassault Systèmes,* 2021
- **TOSCA.** SIMULIA User Assistance. *Dassault Systèmes,* 2021